**Europäisches Patentamt**

(19) **European Patent Office**

**Office européen des brevets**

(11) Veröffentlichungsnummer: **0 183 086**
**B1**

(12) **EUROPÄISCHE PATENTSCHRIFT**

(45) Veröffentlichungstag der Patentschrift:
**18.01.89**

(51) Int. Cl.⁴: **A 61 C 13/265**

(21) Anmeldenummer: **85113954.3**

(22) Anmeldetag: **02.11.85**

(54) **Geschiebeverbindung zwischen einer Zahnprothese und einem Verankerungsteil am Restgebiss, sowie Werkzeug zur Montage der Geschiebeverbindung.**

(30) Priorität: **07.11.84 DE 3440597**

(43) Veröffentlichungstag der Anmeldung:
**04.06.86 Patentblatt 86/23**

(45) Bekanntmachung des Hinweises auf die Patenterteilung:
**18.01.89 Patentblatt 89/3**

(84) Benannte Vertragsstaaten:
**AT BE CH DE FR IT LI LU NL**

(56) Entgegenhaltungen:
**EP-A- 0 019 590**
**EP-A- 0 085 126**
**EP-A- 0 085 781**
**DE-U- 7 032 068**
**DE-U- 8 206 064**
**DE-U- 8 321 205**

(73) Patentinhaber: **Bademis, Johannis, Junkerstrasse 11, D-7910 Neu-Ulm/Schwaighofen (DE)**

(72) Erfinder: **Bademis, Johannis, Junkerstrasse 11, D-7910 Neu-Ulm/Schwaighofen (DE)**

(74) Vertreter: **Fay, Hermann, Dipl.-Phys. Dr. et al, Dr. Hermann Fay Dr. Joachim Dziewior Ensingerstrasse 21 Postfach 17 67, D-7900 Ulm/Donau (DE)**

ACTORUM AG

**Beschreibung**

Die Erfindung betrifft eine Geschiebeverbindung zwischen einer Zahnprothese und einem Verankerungsteil am Restgebiss, bestehend aus einem schieberartigen Partrizenteil, einem einen Hohlraum zur formschlüssigen Aufnahme des Patrizenteils bildenden Matrizenteil und aus einem beide Geschiebeteile quer zur Einschubrichtung des Patrizenteils in das Matrizenteil verbindenden Riegelstift, der durch Eindrücken gegen die Kraft einer Feder verschiebbar ist, so dass die Geschiebeverbindung geöffnet werden kann.

Bei einer aus der DE-OS 3 201 391 bekannten Geschiebeverbindung dieser Art verbindet der Riegelstift im Passsitz die beiden Geschiebeteile. Ist die Geschiebeverbindung durch den Riegelstift geschlossen und im fertigen Zahnersatzteil äusserlich verkleidet bzw. verblendet, so kann die Geschiebeverbindung ohne Beschädigung der fertigen Arbeit nicht wieder geöffnet werden.

Aus dem DE-U-8 206 064 ist eine Vorrichtung zur lösbaren Befestigung einer zahntechnischen Teilprothese an Kronen bekannt, bei der der Riegelstift mit einem im Querschnitt reduzierten Abschnitt versehen ist, der bei Verschiebung des Riegelstifts unter eine verbreiterte Öffnung eines die Teilprothese tragenden Blockes verstellbar ist und somit ermöglicht, die Teilprothese zu entfernen. Diese Ausbildung erfordert jedoch eine hohe Masshaltigkeit und Sauberkeit der ineinandergreifenden Teile, um ein zuverlässiges gegenseitiges Einrasten und Lösen voneinander zu gewährleisten.

Die EP-A-0085 126 beschreibt ein Verbindungsteil für lösbare Prothesenteile, das aus einem am Ende eines Zylinderstifts angeordneten Kopfteil besteht, das in eine der Querschnittsgestalt des Kopfteils angepasste Aufnahmenut einschiebbar ist. Der Zylinderstift ist in einem Hülsenkörper axial verschiebbar gelagert, wobei der Hülsenkörper bei in die Aufnahmenut eingeschobenem Kopfteil einen am offenen Ende der Aufnahmenut aussenseitig angebrachten Vorsprung hintergreift. Dieses Verbindungsteil gewährleistet jedoch keine drehfeste Verbindung zwischen einem Matrizen- und Patrizenteil.

Der Erfindung liegt die Aufgabe zugrunde, eine Geschiebeverbindung der eingangs genannten Art so auszubilden, dass die Geschiebeverbindung auch beim fertigen Zahnersatzteil jederzeit leicht geöffnet und wieder geschlossen werden kann, ohne dass ein vorheriger Eingriff oder gar eine Beschädigung des Zahnersatzteiles nötig ist.

Diese Aufgabe wird nach der Erfindung dadurch gelöst, dass der im Matrizenteil axial verschiebbar geführte Riegelstift einen im Matrizenhohlraum liegenden, quer zu seiner Axialrichtung gegenüber dem Stiftquerschnitt verbreiterten Riegelkopf aufweist und mit dem Riegelkopf voran gegen die Kraft der Feder in den Matrizenhohlraum hinein verstellbar ist, und dass im Patrizenteil ein sich in Einschubrichtung erstreckender, beim Einschieben des Patrizenteils in das Matrizenteil den Riegelkopf aufnehmender Schlitz vorgesehen ist, der in einer Aussparung endet, in die bei voll in das Matrizenteil eingeschobenem Patrizenteil der Riegelkopf unter der Kraft der Feder formschlüssig einrastet.

Der Riegelstift ist auch bei der fertigen Arbeit von aussen zugänglich, so dass er durch Eindrücken gegen die Kraft der Feder verschoben und die Geschiebeverbindung dadurch jederzeit geöffnet werden kann. Der Rastsitz des Riegelkopfes in der Aussparung sorgt für einen sicheren und spielfreien Zusammenhalt der Geschiebeverbindung, so dass auf einen knappen Reibungssitz der Geschiebeteile ineinander verzichtet werden kann. Beide Geschiebeteile können daher ohne Kraftaufwand zusammengefügt werden, so dass die im Restgebiss vorhandenen Zähne nicht unnötig belastet werden. Die Geschiebeverbindung kann nach ihrem Öffnen jederzeit leicht wieder geschlossen werden, da dazu die Geschiebeteile nur bis zum Einrasten des Riegelkopfes zusammengefügt zu werden brauchen. Beide Geschiebeteile sind angussfähig oder können verklebt oder gelötet werden, so dass die erfindungsgemässe Geschiebeverbindung vielseitig verwendbar ist. Die Geschiebeverbindung ist insbesondere für Zahnprothesen geeignet, die jederzeit herausgenommen und wieder eingesetzt werden können müssen. Soweit dabei Verschleisserscheinungen auftreten, führen sie nicht zu einer Beeinträchtigung des Sitzes der Zahnprothese, da der unter Federkraft stehende Rastsitz des Riegelkopfes in der ihm zugeordneten Aussparung des Patrizenteiles verhindert, dass der Sitz der Zahnprothese unsicher und spielbehaftet wird.

Eine bevorzugte Ausführungsform der Erfindung ist dadurch gekennzeichnet, dass das Matrizenteil einen den Riegelstift ausserhalb des Matrizenhohlraums aufnehmenden, durch eine Querwand vom Matrizenhohlraum getrennten Führungskanal aufweist, in dem ein mit dem Riegelstift verbundenes Führungsglied verschiebbar ist, zwischen dem und der Querwand die Feder in Form einer den Riegelstift umgebenden Schraubendruckfeder abgestützt ist. Zweckmässig weist das Führungsglied einen die Feder aufnehmenden hohlen Ringzylinder auf, wobei im übrigen der Führungskanal von einer zylindrischen Hülse gebildet und das Führungsglied entsprechend zylindrische Gestalt besitzen kann. Dadurch wird einerseits erreicht, dass die Führung des Riegelstiftes nach aussen hin abgeschlossen ist, also gegen Eindringen von Verunreinigungen gesichert ist. Andererseits ist es ohne weiteres möglich, den Riegelstift und die Hülse vollkommen in das um das Matrizenteil herum ausgebildete Zahnersatzteil einzubetten.

Zweckmässig ist der Riegelstift mit dem Führungsglied einstückig ausgebildet und der Riegelkopf auf den Riegelstift aufgeschraubt. Der Riegelstift kann dann zunächst ohne den Riegelkopf bei der Montage der Geschiebeverbindung durch die für den Riegelstift vorgesehene Öffnung in der Querwand hindurchgeschoben und erst dann mit dem Riegelkopf versehen werden. Um den Riegelkopf beim Aufschrauben auf den Riegelstift im Matrizenhohlraum gegen Verdrehung zu sichern, kann der Riegelkopf eine Randausnehmung aufweisen, durch die der Riegelkopf in einem noch zu beschreibenden Werkzeug verdrehungsfest gehalten werden kann. Im übrigen empfiehlt es sich, den Riegelkopf drehsymmetrisch um die Achse des Riegelstiftes auszubilden, so dass eine Verdrehsicherung des Riegelkopfes oder des Riegelstiftes in der fertig montierten Geschiebeverbindung entbehrlich ist.

Bezüglich der Ausbildung des Patrizenteiles empfiehlt es sich, dass der Schlitz im Querschnitt einen vorderen Schlitzteil von der Breite nur des Riegelstiftdurchmessers und einen hinteren Schlitzteil von der Breite des Riegelkopfdurchmessers aufweist und dass sich der vordere Schlitzteil in der Aussparung auf den Durchmesser des Riegelkopfes erweitert. Um die Geschiebeverbindung ohne eigene Betätigung des Riegelstiftes in einfacher Weise zusammenstecken zu können, ist nach einem weiteren Vorschlag der Erfindung vorgesehen, dass die Schulterfläche im Übergang zwischen dem vorderen und dem hinteren Schlitzteil eine schräge Ablauffläche für den Riegelkopf bildet, so dass die in Verstellrichtung des Riegelstiftes gesehene Tiefe des vorderen Schlitzteiles am offenen Schlitzende gering oder Null ist und gegen die Aussparung hin zunimmt. Wird daher die Geschiebeverbindung zusammengesteckt, so wird der Riegelkopf über die schräge Ablauffläche gegen die Kraft der Feder zunehmend tiefer in den Matrizenhohlraum hineinverschoben, bis die Geschiebeteile vollständig zusammengesteckt sind und der Riegelkopf durch die Kraft der Feder in die Aussparung des Patrizenteiles einrasten kann. Es empfiehlt sich in diesem Zusammenhang weiter, dass die Schulterfläche auch im Schlitzquerschnitt gesehen schräg verläuft, so dass sich die Schlitzbreite zum hinteren Schlitzteil hin keilartig erweitert, und dass der Riegelkopf sich zum Riegelstift hin entsprechend konisch verjüngt. Es ergibt sich auf diese Weise eine keilartige Anlage des Riegelkopfes am Patrizenteil mit dem Vorteil, dass sich die Geschiebeteile unter der Kraft der Feder gegenseitig spielfrei festziehen.

Das Patrizenteil ist in bevorzugter Ausführungsform als im wesentlichen rechteckige Platte und das Matrizenteil als ein die Platte aufnehmendes Gehäuse ausgebildet, das mit einer seiner breiten Seitenwände die Trennwand bildet und die Hülse trägt und auf einer der zur Einschubrichtung parallelen Schmalseiten für die Verbindung des Patrizenteils mit dem Verankerungsteil offen ist. Das Verankerungsteil kann seinerseits als schwalbenschwanzförmiger Ansatz einstückig mit dem Patrizenteil ausgebildet sein.

Gegenstand der Erfindung ist weiter ein Werkzeug zur Montage der Geschiebeverbindung, das dadurch gekennzeichnet ist, dass es als ein formschlüssig in den Matrizenhohlraum einsteckbarer Schieber mit einer Formaussparung zur Aufnahme des Riegelkopfes ausgebildet und am Aussparungsrand mit einem Vorsprung versehen ist, der bei in die Formaussparung eingelegtem Riegelkopf in dessen Randausnehmung greift.

Im folgenden wird die Erfindung an einem in der Zeichnung dargestellten Ausführungsbeispiel näher erläutert; es zeigen:

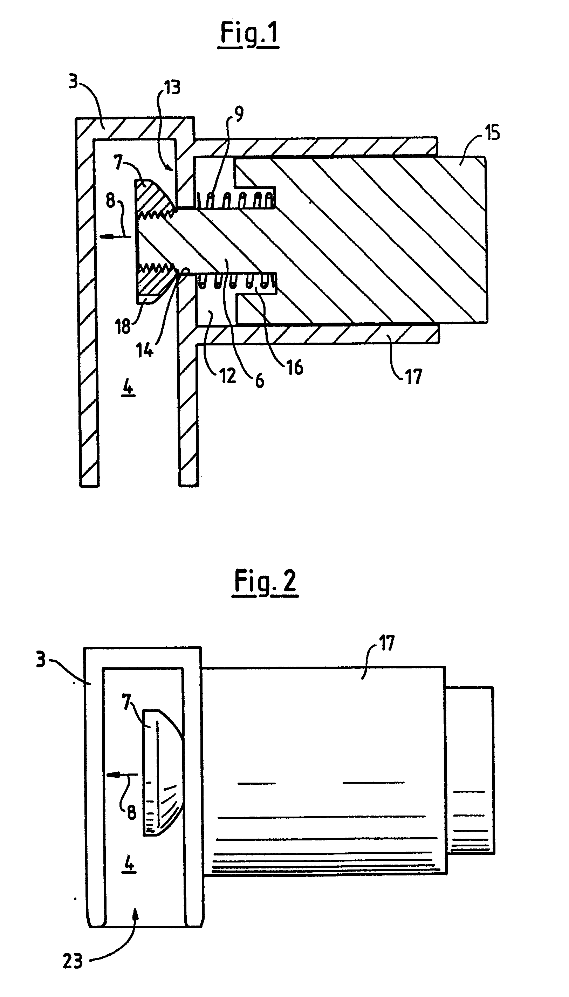

Fig. 1 einen Querschnitt durch das Matrizenteil einer Geschiebeverbindung nach der Erfindung,

Fig. 2 eine seitliche Stirnansicht des Matrizenteils nach Fig. 1,

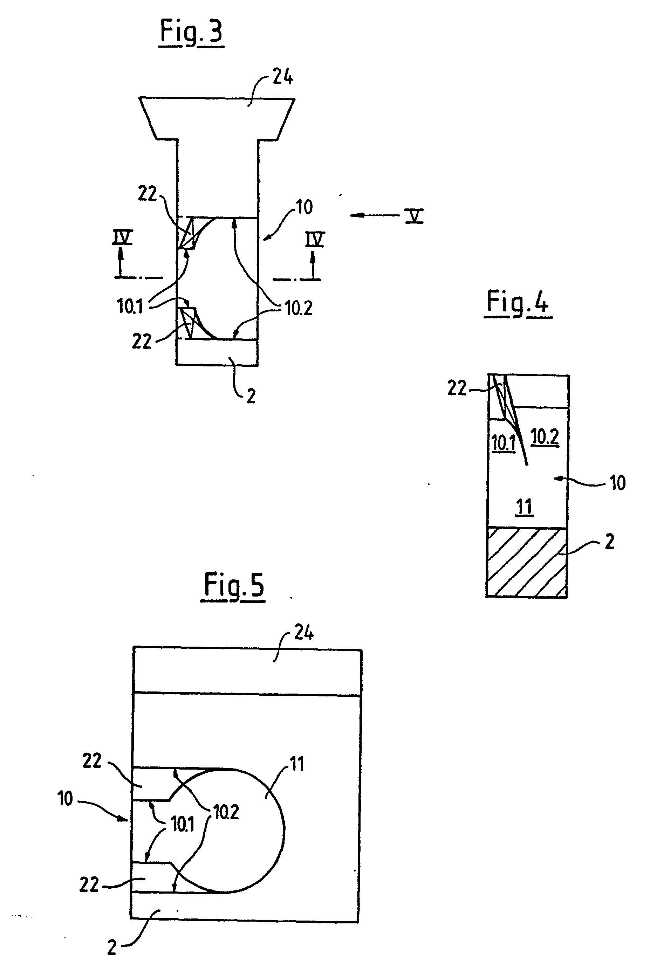

Fig. 3 eine Draufsicht auf das zum Matrizenteil der Fig. 1 passende Patrizenteil,

Fig. 4 den Schnitt IV – IV in Fig. 3,

Fig. 5 die Seitenansicht in Richtung V des Patrizenteils nach Fig. 4,

Fig. 6 die Geschiebeverbindung in auseinandergezogenem Zustand und in perspektivischer Darstellung, wobei das Patrizenteil an einer Krone angeschlossen ist,

Fig. 7 ein Werkzeug zur Montage des Riegelkopfes in Seitenansicht,

Fig. 8 den Schnitt VIII – VIII in Fig. 7 und

Fig. 9 die Stirnansicht des Werkzeugs in Richtung des Pfeiles IX in Fig. 7.

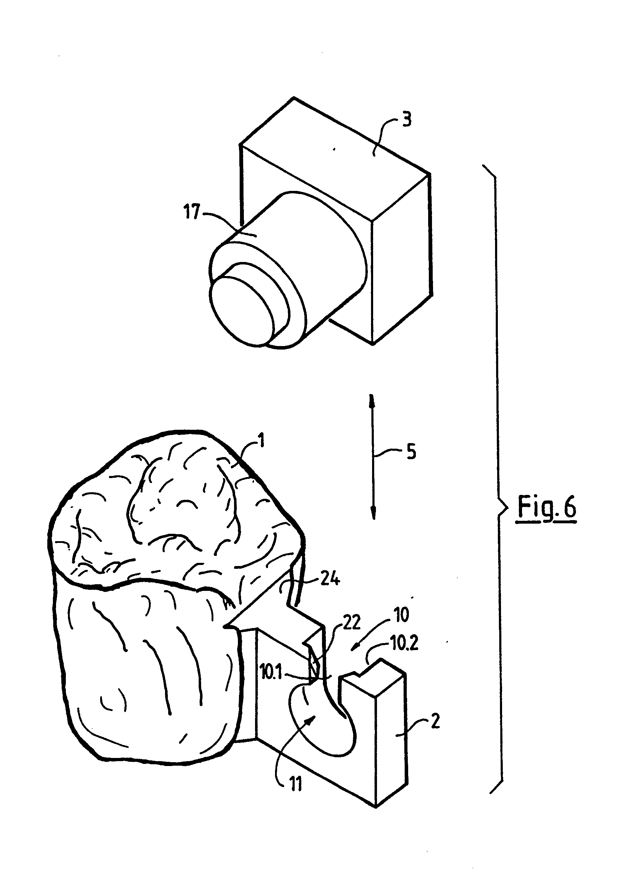

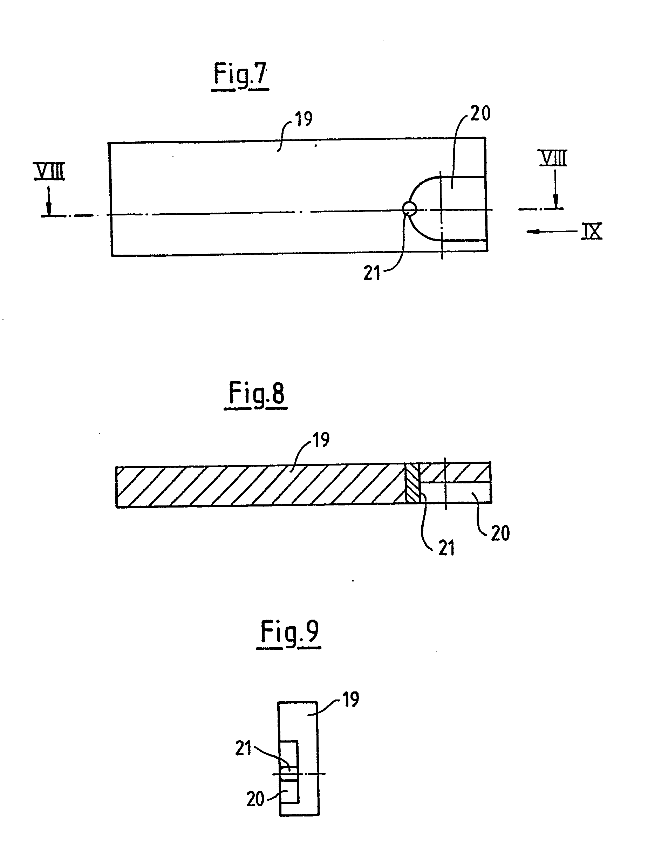

Die Geschiebeverbindung zwischen einer selbst nicht dargestellten Zahnprothese und einem lediglich in Fig. 6 in Form einer Krone 1 dargestellten Verankerungsteil am Restgebiss besteht aus einem schieberartigen Patrizenteil 2, einem Matrizenteil 3, das einen Hohlraum 4 zur formschlüssigen Aufnahme des Patrizenteils 2 bildet, und aus einem beide Geschiebeteile 2, 3 quer zur Einschubrichtung (Pfeil 5) des Patrizenteiles 2 in das Matrizenteil 3 verbindenden Riegelstift 6. Der Riegelstift 6 ist axial verschiebbar im Matrizenteil 3 geführt und trägt einen im Matrizenhohlraum 4 liegenden, quer zur Einschubrichtung gegenüber dem Stiftquerschnitt verbreiterten Riegelkopf 7. Der Riegelstift 6 ist mit dem Riegelkopf 7 voran in Richtung des Pfeiles 8 gegen die Kraft einer Feder 9 im Matrizenhohlraum 4 verstellbar. Im Patrizenteil 2 befindet sich ein Schlitz 10, der sich in Einschubrichtung (Pfeil 5) des Patrizenteils 2 in das Matrizenteil 3 erstreckt und beim Einschieben des Patrizenteils 2 in das Matrizenteil 3 den im Matrizenhohlraum 4 gegen die Feder 9 vorverstellten Riegelstift 6 mit dem Riegelkopf 7 aufnimmt. Der Schlitz 10 ist an dem in Einschubrichtung (Pfeil 5) vorderen Rand des Patrizenteiles 2 offen und endet gegenüberliegend in einer Aussparung 11, in die bei voll in das Matrizenteil 3 eingeschobenem Patrizenteil 1 der Riegelkopf 7 unter der Kraft der Feder 9 formschlüssig einrastet. Das Matrizenteil 3 besitzt einen den Riegelstift 6 ausserhalb des Matrizenhohlraums 4 aufnehmenden Führungskanal 12, der durch eine Querwand 13 vom Matrizenhohlraum 4 getrennt ist. In der Querwand 13 befindet sich eine Öffnung 14 für den Durchtritt des Riegelstiftes 6. Im Führungskanal 12 ist ein mit dem Riegelstift festes, nämlich mit ihm im Ausführungsbeispiel einstückig ausgebildetes Führungsglied 15 verschiebbar geführt. Zwischen diesem Führungsglied 15 und der Querwand 13 ist die Feder 9 in Form einer den Riegelstift 6 umgebenden Schraubendruckfeder abgestützt. Das Führungsglied 15 weist einen die Feder 9 aufnehmenden hohlen Ringzylinder 16 auf, so dass es unter Zusammendrücken der Feder 9 bis zum Anschlag an der Querwand 13 im Führungskanal 12 verstellt werden kann. Der Führungskanal 12 ist von einer an der Querwand 13 sitzenden zylindrischen Hülse 17 gebildet. Das Führungsglied 15 besitzt entsprechend zylindrische Gestalt. Der Riegelkopf 7 ist auf dem Riegelstift 6 aufgeschraubt und mit einer Randausnehmung 18 zum verdrehungsfesten Halten des Riegelkopfes 7 im Matrizenhohlraum 4 beim Aufschrauben auf den Riegelstift 6 versehen. Dazu dient ein Werkzeug, das entsprechend Fig. 7 bis 9 als ein formschlüssig in den Matrizenhohlraum 4 einsteckbarer Schieber 19 ausgebildet ist. Der Schieber 19 ist mit einer Formaussparung 20 zur Aufnahme des Riegelkopfes 7 versehen und besitzt am Aussparungsrand einen Vorsprung 21, der bei in die Formaussparung 20 eingelegtem Riegelkopf 7 in dessen Randausnehmung 18 greift. Mit Hilfe dieses Werkzeugs kann der Riegelkopf 7 im Matrizenhohlraum 4 koaxial zum Riegelstift 6 ausgerichtet gehalten werden, wenn der Riegelstift 6 in den Riegelkopf 7 eingeschraubt wird. Der Riegelkopf 7 ist im übrigen drehsymmetrisch um die Achse des Riegelstiftes 6 ausgebildet, so dass in der fertig montierten Geschiebeverbindung der Riegelkopf 7 oder der Riegelstift 6 keiner Verdrehungssicherung bedarf.

Der im Patrizenteil 2 vorgesehene Schlitz 10 besitzt im Querschnitt einen vorderen Schlitzteil 10.1 von der Breite nur des Riegelstiftdurchmessers und einen hinteren Schlitzteil 10.2 von der Breite des Riegelkopfdurchmessers. In der Aussparung 11 erweitert sich der vordere Schlitzteil 10.1 bis auf den Durchmesser des Riegelkopfes 7. Die im Übergang zwischen dem vorderen und dem hinteren Schlitzteil 10.1, 10.2 beidseits des Schlitzes 10 gebildeten Schulterflächen 22 sind geneigt und bilden dadurch schräge Ablaufflächen für den Riegelkopf 7. Die Neigung der Schulterflächen 22 ist dabei derart, dass die in Verstellrichtung (Pfeil 8) des Riegelstiftes 6 gesehene Tiefe des vorderen Schlitzteils 10.1 am offenen Schlitzende gering oder Null ist und gegen die Aussparung 11 hin zunimmt. Werden daher die beiden Geschiebeteile 2, 3 zusammengesteckt, wird über die Schulterflächen 22 der Riegelkopf 7 gegen die Kraft der Feder 9 zunehmend tiefer in den Matrizenhohlraum vorgedrückt, bis er bei vollständig zusammengesteckter Geschiebeverbindung in die Aussparung 11 einrasten kann. Die Schulterflächen 22 verlaufen auch im Schlitzquerschnitt gesehen schräg, so dass sich die Schlitzbreite zum hinteren Schlitzteil 10.2 hin keilartig erweitert. Entsprechend konisch verjüngt sich der Riegelkopf 7 in Richtung zum Riegelstift 6 hin. Der Riegelkopf 7 liegt im Ergebnis den Schulterflächen 22 in zueinander geneigt verlaufenden Linien an, wodurch sich unter der Kraft der Feder 9 eine gegenseitige Selbstzentrierung und spielfreie Ausrichtung der Geschiebeteile 2, 3 aneinander ergibt.

Das Patrizenteil 2 ist als im wesentlichen rechteckige Platte und das Matrizenteil 3 als diese Platte aufnehmendes Gehäuse ausgebildet, das mit einer seiner breiten Seitenwände die Trennwand 13 bildet. Mit derselben Wand trägt es aussen die Hülse 17. Ausserdem ist das Gehäuse auf einer der zur Einschubrichtung parallelen Schmalseiten bei 23 für die Verbindung des Patrizenteils 2 mit dem Verankerungsteil 24 offen. Das Verankerungsteil 24 seinerseits ist als schwalbenschwanzförmiger Ansatz einstückig mit dem Patrizenteil 2 ausgebildet und an die Krone 1 angeschlossen, die den Anschluss zum nicht dargestellten Restgebiss ermöglicht.

## Patentansprüche

1. Geschiebeverbindung zwischen einer Zahnprothese und einem Verankerungsteil am Restgebiss, bestehend aus einem schieberartigen Patrizenteil (2), einem einen Hohlraum (4) zur formschlüssigen Aufnahme des Patrizenteils (1) bildenden Matrizenteil (3) und aus einem beide Geschiebeteile (2, 3) quer zur Einschubrichtung (5) des Patrizenteils (1) in das Matrizenteil (2) verbindenden Riegelstift (6), der durch Eindrücken gegen die Kraft einer Feder (9) verschiebbar ist, so dass die Geschiebeverbindung geöffnet werden kann, dadurch gekennzeichnet, dass der im Matrizenteil (3) axial verschiebbar geführte Riegelstift (6) einen im Matrizenhohlraum (4) liegenden, quer zu seiner Axialrichtung gegenüber dem Stiftquerschnitt verbreiterten Riegelkopf (7) aufweist und mit dem Riegelkopf (7) voran gegen die Kraft der Feder (9) in den Matrizenhohlraum (4) hinein verstellbar ist und dass im Patrizenteil (2) ein sich in Einschubrichtung (5) erstreckender, beim Einschieben des Patrizenteils (2) in das Matrizenteil (3) den Riegelkopf (7) aufnehmender Schlitz (10) vorgesehen ist, der in seiner Aussparung (11) endet, in die bei voll in das Matrizenteil (3) eingeschobenem Patrizenteil (2) der Riegelkopf (7) unter der Kraft der Feder (9) formschlüssig einrastet.

2. Geschiebeverbindung nach Anspruch 1, dadurch gekennzeichnet, dass das Matrizenteil (3) einen den Riegelstift (6) ausserhalb des Matrizenhohlraums (4) aufnehmenden, durch eine Querwand (13) vom Matrizenhohlraum getrennten Führungskanal (12) aufweist, in dem ein mit dem Riegelstift (6) verbundenes Führungsglied (15) verschiebbar ist, zwischen dem und der Querwand (13) die Feder (9) in Form einer den Riegelstift (6) umgebenden Schraubendruckfeder abgestützt ist.

3. Geschiebeverbindung nach Anspruch 2, dadurch gekennzeichnet, dass das Führungsglied (15) einen die Feder (9) aufnehmenden hohlen Ringzylinder (16) aufweist.

4. Geschiebeverbindung nach den Ansprüchen 2 und 3, dadurch gekennzeichnet, dass der Führungskanal (12) von einer zylindrischen Hülse (17) gebildet ist und das Führungsglied (15) entsprechend zylindrische Gestalt aufweist.

5. Geschiebeverbindung nach einem der Ansprüche 2 bis 4, dadurch gekennzeichnet, dass der Riegelstift (6) mit dem Führungsglied (15) einstückig ausgebildet und der Riegelkopf (7) auf den Riegelstift (6) aufgeschraubt ist.

6. Geschiebeverbindung nach Anspruch 5, dadurch gekennzeichnet, dass der Riegelkopf (7) eine Randausnehmung (18) zum verdrehungsfesten Halten des Riegelkopfes (7) beim Aufschrauben auf den Riegelstift (6) aufweist.

7. Geschiebeverbindung nach einem der Ansprüche 1 bis 6, dadurch gekennzeichnet, dass der Riegelkopf (7) drehsymmetrisch um die Achse des Riegelstiftes (6) ausgebildet ist.

8. Geschiebeverbindung nach einem der Ansprüche 1 bis 7, dadurch gekennzeichnet, dass der Schlitz (10) im Querschnitt einen vorderen Schlitzteil (10.1) von der Breite nur des Riegelstiftdurchmessers und einen hinteren Schlitzteil (10.2) von der Breite des Riegelkopfdurchmessers aufweist und dass sich der vordere Schlitzteil (10.1) in der Aussparung (11) auf den Durchmesser des Riegelkopfes (7) erweitert.

9. Geschiebeverbindung nach Anspruch 8, dadurch gekennzeichnet, dass die im Übergang zwischen dem vorderen und dem hinteren Schlitzteil (10.1, 10.2) gebildete Schulterfläche (22) eine schräge Ablauffläche für den Riegelkopf (7) bildet, so dass die in Verstellrichtung (8) des Riegelstiftes (6) gesehene Tiefe des vorderen Schlitzteiles (10.1) am offenen Schlitzende gering oder Null ist und gegen die Aussparung (11) hin zunimmt.

10. Geschiebeverbindung nach Anspruch 9, dadurch gekenzeichnet, dass die Schulterfläche (22) auch im Schlitzquerschnitt gesehen schräg verläuft, so dass sich die Schlitzbreite zum hinteren Schlitzteil (10.2) hin keilartig erweitert, und dass der Riegelkopf (7) sich zum Riegelstift (6) hin entsprechend konisch verjüngt.

11. Geschiebeverbindung nach einem der Ansprüche 1 bis 10, dadurch gekennzeichnet, dass das Patrizenteil (2) als im wesentlichen rechteckige Platte und das Matrizenteil (3) als die Platte aufnehmendes Gehäuse ausgebildet ist, das mit einer breiten Seitenwand die Trennwand (13) bildet, und die Hülse (17) trägt und auf einer der zur Einschubrichtung parallelen Schmalseiten (23) für die Verbindung des Patrizenteils (2) mit dem Verankerungsteil offen ist.

12. Geschiebeverbindung nach den Ansprüchen 1 bis 11, dadurch gekennzeichnet, dass das Verankerungsteil seinerseits als schwalbenschwanzförmiger Ansatz (24) einstückig mit dem Patrizenteil (2) ausgebildet ist.

13. Werkzeug zur Montage der Geschiebeverbindung nach Anspruch 6, dadurch gekennzeichnet, dass es als ein formschlüssig in den Matrizenhohlraum (4) einsteckbarer Schieber (19) mit einer Formaussparung (20) zur Aufnahme des Riegelkopfes (7) ausgebildet und am Aussparungsrand mit einem Vorsprung (21) versehen ist, der bei in die Formaussparung (20) eingelegtem Riegelkopf (7) in dessen Randausnehmung (10) greift.

## Claims

1. A slide bolt connection between a dental prosthesis and an anchoring member of the remaining set of teeth, consisting of a slide-like male part (2), a female part (3) forming a hollow space (4) for receiving the male part (1) in a positively locking manner, and of a locking pin (6) for connecting the two slide bolt parts (2, 3) transverse to the direction of insertion of the male part (1) in the female part (2), the locking pin (6) being displaceable by being pressed in against the force of a spring (9) so that the slide bolt connection can be opened, characterised in that the locking pin (6) axially displaceably guided in the female part (3) has a bolt head (7) lying in the hollow of the female part (4) and widening with respect to the cross-section of the pin transverse to the axial direction of the said bolt head, and the said locking pin (6) is movable in advance into the hollow (4) of the female part against the force of the spring (9), and in that a slot (10), which extends in the direction of insertion (5) and receives the bolt head (7) when the male part (2) is inserted in the female part (3), is provided in the male part (2) and ends in a recess (11), into which the bolt head (7) engages with positive locking under the force of the spring (9) when the male part (2) is fully inserted in the female part (3).

2. A slide bolt connection according to claim 1, characterised in that the female part (3) has a guide channel (12) separated from the hollow (4) of the female part by a transverse wall (13) and receiving the locking pin (6) outside the hollow (4) of the female part, in which guide channel (12) a guide member (15) connected to the locking pin (6) is displaceable, the spring (9) bearing between the said guide member and the transverse wall (13) in the form of a helical pressure spring surrounding the locking pin (6).

3. A slide bolt connection according to claim 2, characterised in that the guide member (15) has a hollow annular cylinder (16) receiving the spring (9).

4. A slide bolt connection according to claims 2 and 3, characterised in that the guide channel (12) is formed of a cylindrical sleeve (17) and the guide member (15) has a correspondingly cylindrical shape.

5. A slide bolt connection according to one of the claims 2 to 4, characterised in that the locking pin (6) is formed integrally with the guide member (15) and the bolt head (7) is screwed on to the locking pin (6).

6. A slide bolt connection according to claim 5, characterised in that the bolt head (7) has a peripheral recess (18) for holding the bolt head (7) in a non-rotational manner when the latter is being screwed on to the locking pin (6).

7. A slide bolt connection according to one of the claims 1 to 6, characterised in that the bolt head (7) is formed so as to be rotationally symmetrical about the axis of the locking pin (6).

8. A slide bolt connection according to one of claims 1 to 7, characterised in that the slot (10) has a front slot portion (10.1) only of the width of the locking pin diameter and a rear slot portion (10.2) of the width of the bolt head diameter, and in that the front slot portion (10.2) widens in the recess (11) to the diameter of the bolt head (7).

9. A slide bolt connection according to claim 8, characterised in that the shoulder face (22) formed in the transition between the front and the rear slot portion (10.1, 10.2) forms an oblique run-off face for the bolt head (7), so that the depht of the front slot portion (10.1) seen in the direction of displacement (8) of the locking pin (6) is minimal or zero at the open slot end and increases towards the recess (11).

10. A slide bolt connection according to claim 9, characterised in that the shoulder face (22) also extends obliquely seen in the slot cross-section, so that the slot width widens like a wedge toward the rear slot portion (10.2) and that the bolt head (7) tapers in a correspondingly conical manner towards the locking pin (6).

11. A slide bolt connection according to one of claims 1 to 10 characterised in that the male part (2) is in the form of a substantially rectangular plate and the female part (3) is in the form of a housing which receives the plate and which with a wide side wall forms the separating wall (13) and carries the sleeve (17) and is open on one of the narrow sides (23) which are parallel to the direction of insertion, for connecting the male part (2) to the anchoring part.

12. A slide bolt connection according to claims 1 to 11 characterised in that the anchoring part is in turn in the form of a dovetail-shaped projection (24) in one piece with the male part (2).

13. A tool for assembly of the slide bolt connection according to claim 6 characterised in that it is in the form of a slider (19) which can be inserted positively into the hollow space (4) in the female part, with a shaped recess (20) for receiving the bolt head (7), and is provided at the edge of the recess with a projection (21) which, when the bolt head (7) is fitted into the recess (20), engages in the edge opening (10) of the bolt head.

## Revendications

1. Assemblage coulissant entre une prothèse dentaire et un élément d'ancrage sur la denture restante, comprenant un élément de poinçon (2) en forme de coulisse, un élément de matrice (3) formant une cavité (3) pour le logement à engagement positif de l'élément de poinçon (2) et une broche de verrouillage (6) reliant les deux éléments coulissants (2, 3) transversalement à la direction d'engagement (5) de l'élément de poinçon (2) dans l'élément de matrice (3) et pouvant être déplacée par enfoncement à l'encontre de la force d'un ressort (9) de manière à pouvoir ouvrir l'assemblage coulissant, caractérisé par le fait que la broche de verrouillage (6) guidée dans l'élément de matrice (3) de façon à pouvoir être déplacée dans le sens axial comprend une tête de verrouillage (7) placée dans la cavité (4) de la matrice et élargie transversalement à son sens axial par rapport à la section transversale de la broche, et peut être déplacée, avec la tête (7) vers l'avant, à l'encontre de la force du ressort (9), vers l'intérieur de la cavité (4) de la matrice; et en ce que dans l'élément de poinçon (2) est prévue une fente (10) qui s'étend dans le sens de l'introduction (5) et reçoit la tête (7) lors de l'engagement de l'élément de poinçon (2) dans l'élément de matrice (3), cette fente se terminant par un évidement (11) dans lequel la tête (7) s'enclenche positivement sous l'action du ressort (9), lorsque l'élément de poinçon (2) est entièrement engagé dans l'élément de matrice (3).

2. Assemblage coulissant selon la revendication 1 , caractérisé par le fait que l'élément de matrice (3) comprend un canal de guidage (12) recevant la broche de verrouillage (6) en dehors de la cavité (4) de la matrice et séparé par une paroi transversale (13) de la cavité (4) de la matrice, dans lequel peut être déplacé un élément de guidage (15) relié à la broche (6), le ressort (9) étant un ressort cylindrique de compression entourant la broche (6) prenant appui entre ledit élément de guidage et la paroi transversale (13).

3. Assemblage coulissant selon la revendication 2, caractérisé par le fait que l'élément de guidage (15) présente un cylindre creux annulaire (16) recevant le ressort (9).

4. Assemblage coulissant selon l'une des revendications 2 et 3, caractérisé par le fait que le canal de guidage (12) est constitué par une douille cylindrique (17), l'élément de guidage (15) présentant une forme cylindrique correspondante.

5. Assemblage coulissant selon l'une quelconque des revendications 2 à 4, caractérisé par le fait que la broche de verrouillage (6) est formée d'une seule pièce avec l'élément de guidage (15) et que la tête de verrouillage (7) est vissée sur la broche (6).

6. Assemblage coulissant selon la revendication 5, caractérisé par le fait que la tête (7) présente un évidement latéral (18) pour maintenir la tête (7) contre une rotation lors du vissage sur la broche de verrouillage (6).

7. Assemblage coulissant selon l'une quelconque des revendications 1 à 6, caractérisé par le fait que la tête de verrouillage (7) présente une forme symétrique de révolution autour de l'axe de la broche de verrouillage (6).

8. Assemblage coulissant selon l'une quelconque des revendications 1 à 7, caractérisé par le fait que, en coupe transversale, la fente (10) présente une partie antérieure (10.1) dont la largeur correspond seulement au diamètre de la broche de verrouillage et une partie postérieure (10.2) d'une largeur égale au diamètre de la tête de verrouillage; et que la partie antérieure (10.1) s'évase dans l'évidement (11) jusqu'au diamètre de la tête de verrouillage (7).

9. Assemblage coulissant selon la revendication 8, caractérisé par le fait que la surface de l'épaulement (22) dans la zone de transition entre les parties antérieure et postérieure (10.1, 10.2) forme une rampe pour la tête (7) de sorte que, vue dans la direction de déplacement (8) de la broche (6), la profondeur de la partie antérieure (10.1) à l'extrémité ouverte de la fente est faible ou nulle et qu'elle augmente en direction de l'évidement (11).

10. Assemblage coulissant selon la revendication 9, caractérisé par le fait que, dans une coupe de la fente, la surface de l'épaulement (22) est ègalement inclinée de sorte que la largeur de la fente augmente en forme de clavette en direction de la partie fente postérieure (10.2); et que la tête de verrouillage (7) présente un rétrécissement conique correspondant en direction de la broche de verrouillage (6).

11. Assemblage coulissant selon l'une quelconque des revendications 1 à 10, caractérisé par le fait que l'élément de poinçon (2) a la forme d'une plaque sensiblement rectangulaire, et l'élément de matrice (3) d'un boîtier recevant ladite plaque, ce boîtier formant, avec l'une de ses parois latérales larges, la cloison de séparation (13) et portant la douille (17), et étant ouvert sur l'un des petits côtés (23), parallèles à la direction d'engagement, pour assurer la liaison de l'élément de poinçon (2) avec l'élément d'ancrage.

12. Assemblage coulissant selon l'une quelconque des revendications 1 à 11, caractérisé par le fait que l'élément d'ancrage est réalisé d'une seule pièce avec l'élément de poinçon (2), sous la forme d'un épaulement (24) en queue d'aronde.

13. Outil pour le montage de l'assemblage coulissant selon la revendication 6, caractérisé part le fait qu'il est constitué par une coulisse (19) pouvant être introduite par engagement positif dans la cavité (4) de la matrice et présentant un évidement profilé (20) pour recevoir la tête de verrouillage (7); et qu'il comporte sur le bord de l'évidement une partie saillante (21) s'engageant dans l'évidement latéral (18) de la tête de verrouillage (7) lorsque celle-ci se trouve dans l'évidement profilé (20).

## Fig.1

## Fig.2

Fig.3

Fig.4

Fig.5

<u>Fig.6</u>

## Fig.7

## Fig.8

## Fig.9